# EUROPEAN PATENT SPECIFICATION

(11) **EP 2 895 010 B1**
(45) Date of publication and mention of the grant of the patent: **17.11.2021**
(21) Application number: 13766861.2
(22) Date of filing: 16.09.2013
(51) Int. Cl.: A23L 2/385, A23L 2/60, A23L 5/20, A23L 27/30, A23L 2/56

(54) **A PROCESS FOR PREPARING AN ENHANCED NATURAL SWEETENER**
VERFAHREN ZUR HERSTELLUNG EINES VERBESSERTEN NATÜRLICHEN SÜSSSTOFFES
PROCÉDÉ DE PRÉPARATION D'UN ÉDULCORANT NATUREL AMÉLIORÉ

(30) Priority: 17.09.2012 US 201213621392
(43) Date of publication of application: 22.07.2015
(73) Proprietor: Heartland Consumer Products LLC, Carmel, IN 46032 (US)
(72) Inventor: CATANI, Steven J., Athens, Georgia 30606 (US); NAVIA, Juan L., Doylestown, Pennsylvania 18901 (US)
(74) Representative: Carpmaels & Ransford LLP
(86) International application number: PCT/US2013/059914
(87) International publication number: WO 2014/043611

(56) References cited:
- WO-A1-2012/006742
- WO-A2-2009/086049
- CN-A- 102 210 367
- JP-A- S5 626 168
- US-A- 5 112 610
- US-A1- 2010 112 126
- DATABASE FSTA [Online] INTERNATIONAL FOOD INFORMATION SERVICE (IFIS), FRANkFURT-MAIN, DE; 7 February 1993 (1993-02-07), Sardzhveladze et al.: "Manufacture of a dry product from Stevia rebaudiana Bertoni leaves. (translated)", XP002715569, Database accession no. FS-1994-12-T-0065 & SU 1 792 627 A1 7 February 1993 (1993-02-07)
- None

## Description

### BACKGROUND OF THE INVENTION

### Field of the Invention

The present invention relates to a process for preparing a sweetener, as defined in the claims. More particularly, the present invention relates to a process as defined in the claims for preparing a natural sweetener that has enhanced flavor attributes.

CN 102210367 concerns a method for processing stevioside-enriched stevia rebaudianum tea.

JP S54-101557 concerns a preparation of dried stevia leaves involving passing steam over fresh stevia leaves.

JP 53026168 concerns preparation of stevia leaves by subjecting raw stevia leaves to heat treatment.

US patent no. 5,112,610 concerns a method of making a natural sweetener involving subjecting stevia rebaudiana extracts to supercritical fluid.

*Stevia rebaudiana* Bertoni, also known as *Eupatorium rebaudianum* Bertoni, (stevia) is a plant that is known as a source of natural sweeteners. In South America, people have used stevia as a sweetener for hundreds of years in foods and have also used the leaves for medicinal purposes. Many other countries, such as Japan, South Korea, Malaysia, Taiwan, Russia, Israel, Mexico, Paraguay, Uruguay, Venezuela, Columbia, Brazil, and Argentina also use stevia for a variety of purposes.

Extracts of stevia are produced by drying and removing moisture from the leaves, which concentrates and intensifies the sweetness of the leaf. Drying also serves as a way to preserve the leaves for use at a later time. Typically, after the leaves are dried, they are crushed. The crushed leaves are then processed further by extraction with hot water, clarification of the extract, and crystallization of the sweet components. This creates an extract where the stevia plant's sweetening elements (called "steviol glycosides") create a more concentrated, sweeter product than the original stevia plant. The result is an extract of stevia in a concentrated form having a sweeter taste. The stevia extract may be up to three hundred times the sweetness of cane sugar.

Stevia extracts that are available commercially are usually treated to remove colors so that the resulting powder is white. During the decolorization process, the extract is also purified of non-steviol (non-sweet) components in the leaf.

Most stevia sweeteners are created from stevia extracts that are intensely sweet. The purified extract may be available in both powder and liquid form and may be used for baking, cooking, or adding to beverages such as tea or coffee. The stevia leaf contains a variety of steviol glycosides, which are the sweet components of the leaf. The glycosides are about 100 to about 500 times sweeter than sucrose, making them high intensity sweeteners. They are also advantageously heat stable and pH stable, and do not ferment nor induce a glycemic response. As such, they can be used in a wide range of low or reduced calorie food products and beverages. However, these glycosides often have metallic and bitter taste notes. The most abundant steviol glycosides are stevioside, and rebaudioside A. Rebaudioside C, D, E and dulcoside A are also present, but in smaller quantities in the leaves. Stevioside has a slight and pleasant herbal taste and the Rebaudioside A has no herbal taste. Although Rebaudioside C and dulcoside A are small in quantity in stevia extract, they are the major components giving bitter aftertaste. The sweetness intensity and quality of flavor of the individual steviol glycosides has been reported, however, little is known about the flavor interactions and synergies of various combinations of steviol glycosides, or about the effect on overall taste quality of combinations of steviol glycosides and other non-sweet components in the leaf.

Steviol glycosides are also referred to as derivatives of the natural product kaurenoic acid. Thus, some common steviol glycosides listed below may also be known by their chemical names, for example:

Stevioside may also be refered to as 13-[(2-O-β-D-glucopyranosyl-β-D-glucopyranosyl)oxy] kaur-16-en-18-oic acid β-D-glucopyranosyl ester; Rebaudioside A as 13-[(2-O-β-D-glucopyranosyl-3-O-β-D-glucopyranosyl-β-D-glucopyranosyl)oxy] kaur-16-en-18-oic acid β-D-glucopyranosyl ester; Rebaudioside C as 13-[(2-O-α-L-rhamnopyranosyl-3-O-β-D-glucopyranosyl-β-D-glucopyranosyl)oxy] kaur-16-en-18-oic acid β-D-glucopyranosyl ester; Dulcoside A as 13-[(2-O-α-L-rhamnopyranosyl-β-D-glucopyranosyl)oxy] kaur-16-en-18-oic acid β-D-glucopyranosyl ester; Rubusoside as 13-β-D-glucopyranosyloxy kaur-16-en-18-oic acid β-D-glucopyranosyl ester; Steviolbioside as 13-[(2-O-β-D-glucopyranosyl-β-D-glucopyranosyl)oxy] kaur-16-en-18-oic acid; and Rebaudioside B as 13-[(2-O-β-D-glucopyranosyl-3-O-β-D-glucopyranosyl-β-D-glucopyranosyl)oxy] kaur-16-en-18-oic acid.

However, although stevia extracts provide desireable sweetness characteristics, they also provide bitter notes and flavors which are not so desireable.

### SUMMARY OF THE INVENTION

The present invention relates to a process for preparing a sweetener comprising the steps of (a) removing volatile components from dried stevia leaves by vapor entrainment; and (b) extracting the treated stevia leaves from step (a) through aqueous extraction.

The present invention relates to a process as defined in the claims for substantially removing or volatilizing volatile components from a surface of dried stevia leaves without the assistance of a carbon containing solvent, wherein the process increases the permeability of solutes into the treated stevia leaves.

The process of the present invention may provide a sweetening composition comprising treated stevia leaves that exhibit an increase in water permeability after being treated when compared to untreated comparable dried stevia leaves.

The process of the present invention may further provide a sweetening composition comprising treated stevia leaves that exhibit a greater affinity to sink in water upon soaking the treated stevia leaves as compared to untreated comparable dried stevia leaves.

The process of the present invention may provide a sweetening composition comprising treated stevia leaves that exhibits a darker color immediately after treatment.

The process of the present invention may provide a sweetening composition comprising stevia extract that contains steviol glycosides and other non-volatile components found in stevia leaves, wherein the steviol glycosides and other non-volatile components combined are less than about 80 wt% of the stevia extract.

The process of the present invention involves extracting one or more flavors from treated stevia leaves, comprising the step of subjecting the treated stevia leaves to one or more extractive steps as defined in the claims.

The process of the present invention may provide a sweetener comprising treated stevia leaves, wherein the treated stevia leaves are formed by substantially reducing volatile components from the stevia leaves.

The process of the present invention may further provide a sweetened beverage composition comprising: stevia extract prepared from or prepared with treated dried stevia leaves, wherein volatile components have been substantially removed.

### BRIEF DESCRIPTION OF THE DRAWINGS

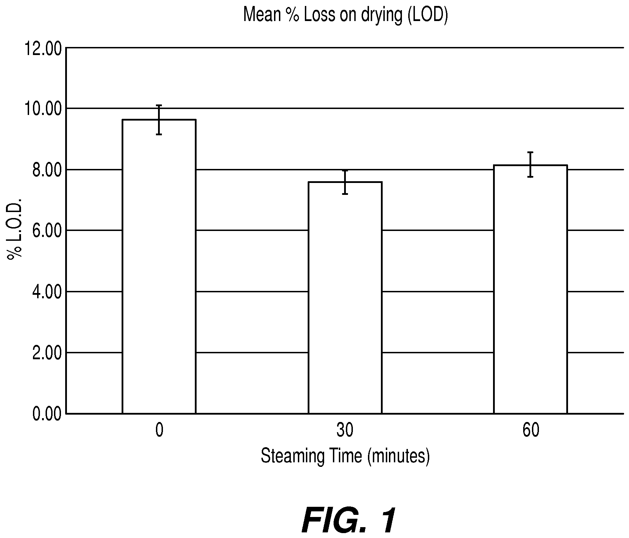

Figure 1 is a graph depicting the mean percent loss on drying (LOD) versus the steaming time in minutes for treated and untreated stevia leaves.

### DETAILED DESCRIPTION OF THE INVENTION

As used herein, a gram of Sucrose Equivalent Sweetness ("SES") is understood to mean the amount of high intensity sweetener needed to be added to an 8 ounce glass of water in order to provide the same sweetness as an independent 8 ounce glass of water containing four grams (about one teaspoon) of sucrose. For example, an intense sweetener that is 400 times the sweetness of sucrose on a weight basis 0.01 g (= 4 g/ 400) to sweeten 8 ounces of water to an equivalent sweetness level as a teaspoon of sucrose. The SES can vary depending on the other flavors in, and physical properties of a food or beverage. This variability will be understood by one skilled in the art.

As used herein *"stevia* extract" or "extracts of *stevia"* is understood to mean a mixture of steviol glycosides extracted from one or more *stevia* plants. *Stevia* extracts include, for example, such steviol glycosides as rebaudioside A, rebaudioside B, rebaudioside C, rebaudioside D, rebaudioside E, dulcoside A and dulcoside B.

As used herein "volatile materials" and/or "volatile components" are defined as material(s) that can be volatilized under the conditions specified. They are, for example, surface oils, flavor components, water insoluble components and/or waxes. Volatile materials may also be referred to as hydrophobic components.

As used herein "dried vegetative matter" is understood to mean vegetative matter that has been subjected to or treated by a drying process in a manner which results in the substantial removal of moisture from the vegetative matter. For example, stevia leaves with a moisture content of less than 15%, more preferably, less than 9% would be dried vegetative matter.

As used herein "modified vegetative matter" or "treated vegetative matter" are understood to mean dried vegetative matter that has been treated or processed in a manner which results in the substantial removal of volatile components.

As used herein "comparable" is understood to mean a similar article or item, e.g., stevia leaf, which has not been treated or processed (other than harvesting or drying for storage).

As used herein "carbon containing liquid" is understood to mean a liquid containing where any portion of the liquid contains carbon.

As used herein "substantial" or "substantially" is understood to mean a measurable change that results in a beneficial or detrimental change in a material. In the case of dried vegetative matter (e.g., stevia leaf) which has been subjected to a treatment or treatments which have resulted in a perceivable darkening of the dried vegetative matter as demonstrated by quantifying the red, blue and green components of color, averaged over a photographic image of the leaves. This is readily accomplished using commercially available software and methods as described by Karcher and Richardson (2003)¹.
¹ DE Karcher∗ and MD Richardson (2003). Quantifying Turfgrass Color Using Digital Image Analysis. Crop

As used herein "significant" is understood to mean a measurable change that results in a beneficial or detrimental change in a material.

The present inventors have discovered how to produce a better tasting natural sweetener composition that includes stevia. By removing or reducing volatile components from dried vegetative matter, the inventors have found that extracts made using the modified vegetative matter have better tasting flavor notes. The improved flavor quality is perceived as a more pleasant sweet taste with less (a) "green" notes characteristic of crude plant extracts, (b) reduced off-flavors from undesirable extractable components (possible from components), and/or (c) reduced bitter notes in the extract.

Moreover, the resulting treated leaves or other components of the dried vegetative matter are more readily extractible when subjected to aqueous extraction. In other words, when the treated vegetative matter is subjected to an extraction step (e.g., steeped in water), it produces a better tasting natural product. For example, treated leaves readily produce a flavorful beverage when subjected to extraction by water, such as in brewing tea. Importantly, some of the removed volatile components have been found to contribute to off flavors, e.g., bitterness in the dried vegetative matter. Thus, the absence or reduction of these volatile components results in an improved tasting product with significantly less off flavor notes. In some embodiments, the volatile components may be recovered as overhead vapors, which may be used in flavors and/or scents.

Vegetative matter useful in the present invention are leaves from a plant of the stevia genus. Leaves may be obtained from particular plant cultivars selected on the basis of one or more traits, such as (1) cultivars selected for drought resistance, (2) cold-climate tolerance, (3) for their content of a particular component, such as (i) Rebaudioside A or a combination of steviol glycosides as a sweetening composition from *stevia rebaudiana,* or (ii) a subtle flavoring agent or flavor modifier, and the like, or (4) for their ability to produce a stable dried vegetable matter better suited for storage, or (5) for the suitability of the leaves for use directly in foods and beverages, or (6) for the absence of a particular component such as (i) compounds that are potentially toxic, especially to humans, or (ii) compounds that contribute undesirable organoleptic qualities (e.g., flavors or odors) to the extract.

The vegetative matter is obtained from plants from the stevia genus. In particular, the plant species *stevia rebaudiana* Bertoni is a preferred source of vegetative matter.

Various methods may be employed to remove or reduce the level of the volatile components from the dried vegetative matter, e.g., dried stevia leaves, so long as the removal of the volatile components is performed in a manner that avoids or minimizes leaching or the unintended removal of desirable components from the dried vegetative matter. Changes to the dried vegetative matter may be accomplished using a variety of methods such as, for example, vapor phase or solid phase methods.

In the vapor phase, desirable results have been achieved when the dried stevia leaves are exposed to an atmosphere that can entrain and/or remove volatile components from the leaves. The process chosen is performed in a manner to avoid or minimize the loss of steviol glycosides and other non-volatile components (e.g., non-volatile water-soluble internal components). The method of the invention involves vapor entrainment, e.g., the steaming of dried leaves. In one embodiment, where water vapor is used to remove the volatile components, the vapor is characterized by (i) being 0-50% of another component with a condensation point that is less than 25°C and greater than or equal to one (1) atmosphere pressure; (ii) being 0-50% of another component that is condensable at atmospheric pressure and a temperature greater than or equal to 25°C; or (iii) being super heated above the boiling point of the liquid. The process used to remove or reduce the level of volatile components may be continuous, batch, semi-batch, or any combination thereof. Equipment such as, for example, a distillation tower, a fractionation tower, a counter-current tower, a damp-dryer, a steamer-extractor and the like may be used to accomplish the intended purpose. This is especially important when a condensable vapor is used, such as water steam, or vapors of other fluids that are liquid at ambient room temperature and atmospheric pressure.
Science, 43:943-951.

The condensable vapor phase can be either a single component or a combination of condensable and non-condensable (gaseous) components.

The vapor is suitably at a temperature that will produce the intended results. That is, the vapor is at a temperature, which substantially removes the volatile components. In one embodiment, the vapor temperature is close to the boiling point of the lowest boiling volatile component. In another embodiment, the vapor is super heated to a temperature above the boiling point of the mixture or a single volatile component. In a preferred embodiment, the vapor is at a temperature below the temperature that will degrade the desirable extractable components if that is known.

A further way to remove undesirable flavor components from a conventional extract of *stevia* leaves is by "steam stripping" the extract. A "conventional extract" here means the product of placing *stevia* leaves in water at a temperature above ambient temperature for a time sufficient to solubilized sweet and other components into the aqueous solution. This solution can then be delivered at the top of a distillation or fractionation column (steam-strip column) while steam, or a mixture of steam and other gas or vapor is forced up the steam-strip column. The volatile components can then be optionally recovered overhead and the extract recovered at the base of the column with volatiles substantially or completely removed.

The process of steam-stripping may result in the dilution or concentration of the extract as it traverses the steam-strip column. Regardless of either situation, the extract can be concentrated to syrup.

Alternatively, in the solid phase, mechanical means such as applying frictional forces to the dried leaves may be employed to facilitate the removal or reduction of volatile components from the dried vegetative matter. Frictional forces include, for example, brushing or scraping the surface with a material such as fine plastic adsorbent beads or filaments. In one embodiment, the brushing or scraping is performed at a temperature slightly above ambient temperature, which improves the removal or transfer process.

The removal of volatile components and alteration of the structure of dried vegetative matter described previously is carried out on dried vegetative matter.

The removal of volatile components is preferably done as a separate operation from the extraction. Preferably, in a way that avoids leaching or the unintended removal of desirable extractable components. However, in some instances, extracting components and internal extractable components that may need to be separated in a subsequent unit operation may be performed simultaneously.

The treated dried vegetative matter exhibits many desirable features. For example, treated leaves will exhibit greater water absorption capacity. Without wishing to be bound by theory, it is thought that the removal of volatile components, in particular from the surface of the leaves, creates a more open structure (e.g., open pores) in the modified leaves, which in turn increases its ability to absorb water. During a later extraction step, the modified leaves may advantageously absorb more water thus facilitating the release of desirable flavor components from the leaves into the water. As such, the efficiency of the extraction is greatly improved. Leaves that are modified/treated will render an extract with a greater concentration of desirable extractable components (e.g., steviol glycosides in the case of *S. rebaudiana*) after 2 minutes when compared to unmodified or untreated comparable leaves.

This attribute of the treated/modified vegetative matter is further exemplified by the treated vegetative matter's higher propensity to sink when placed in water, when compared to vegetative matter that has not been treated to remove volatile components.

For example, stevia leaves that are modified will also display a greater affinity to sink in water in less time. This appears to suggest that the specific gravity of the treated dried stevia leaves is equal to or greater than the specific gravity of untreated dried stevia leaves. Thus, a greater percentage of modified leaves placed in water will sink to the bottom of the container in less time when compared to untreated leaves that tend to sink more slowly.

By modifying the composition of the leaf surface, the extraction properties of the leaf may be beneficially altered. That is, by removing volatile components, particularly from the surface of the leaf, the leaf is modified in such a way that during a subsequent extraction step, the extraction of desirable components from the leaf is facilitated or improved. The same may also be said of other parts of vegetation that may be subject to extraction with water (decoction).

In one particular embodiment, the flavor quality of stevia extract is greatly improved. *S. rebaudiana* leaves that are modified by removing or reducing volatile components will render a sweeter solution faster than comparable unmodified leaves. Moreover, the modified leaves will produce a solution with reduced off-flavors compared to a solution extract prepared with unmodified leaves that have been soaked in water for the same amount of time and under the same conditions.

Another aspect of the present invention is the change that results to the surface of the dried vegetative matter to render it more easily extractable. This beneficial consequence of changing the structure of the dried vegetative matter by exposing it to heated vapors, i.e., at temperatures elevated above ambient. In addition to entraining the volatile components, it is also believed to have the effect of changing the dried vegetative matter so that it is more porous and permeable. Thus during a subsequent, separate, extraction step the increased porosity and permeability enables water to enter the vegetative tissue and for other components, e.g., steviol glycosides, in the dried vegetative matter to diffuse out, so they can more easily pass into the extractant.

To produce a sweetened beverage, the treated vegetative matter may be extracted by various methods as defined in the claims. The extraction may occur in a single step or in multiple steps (e.g., counter currently with multiple extraction steps). In addition, the contact time, temperature, and leaf mass to water proportion may be varied to produce the desired results.

The extraction step is performed separately from the volatile component removal or reduction step. This excludes the operation of simultaneously extracting both volatile components as well as internal extractable components that may need to be separated at a subsequent unit operation.

As stated previously, the extraction of steviol glycosides from the leaves of *stevia* rebaudiana is facilitated by the removal of the volatile components which beneficially impacts: (i) the efficiency of the extraction, and (ii) the flavor quality of the extract.

The improved efficiency of the extraction is evidenced by a variety of factors taken individually or in combination. Such factors may include (i) the ability to accomplish the extraction using a smaller volume of water (extractant), especially if a single extractive step is used; (ii) the ability to complete the recovery of desirable components in fewer extraction stages, particularly if multiple effect extractors are employed; (iii) the ability to accomplish the extraction to the same degree in less time than without pretreatment, as a single, multi-stage extractive process; and (iv) the ability to accomplish the extraction at a lower temperature than without pre-treatment, as a single, multi-stage extractive process.

The removal of volatile components needs to be done as a separate operation from the extraction, and in a way that avoids leaching or unintended removal of desirable extractable components. This excludes the operation of simultaneously extracting both volatile components as well as internal extractable components that may need to be separated at a subsequent unit operation.

With respect to the extraction of steviol glycosides from the leaves of *stevia* rebaudiana, the removal of these components can affect: (i) The efficiency of the extraction, and (ii) the flavor quality of the extract. The extraction can be carried out as a step immediately following vapor treatment of the dried vegetative matter (e.g., *stevia* leaves).

The improved efficiency of the extraction is evidenced by a variety of factors taken individually or in any combination. Such factors may include: (i) the ability to accomplish the extraction using a smaller volume of water (extractant), especially if a single extractive step is used; (ii) the ability to complete the recovery of desirable components in fewer extraction stages, particularly if multiple effect extractors are employed; (iii) the ability to accomplish the extraction to the same degree in less time than without pretreatment, as a single, multi-stage extractive process; (iv) the ability to accomplish the extraction at a lower temperature than without pre-treatment, as a single, multi-stage extractive process.

The improved flavor quality may be perceived as a more pleasant sweet taste with less "green" noted characteristic of crude plant extracts, reduced off-flavors from undesirable extractable components (possible from components), or reduced bitter notes in the extract.

A possible advantage of using dried, structure/surface modified leaves is that more expensive process equipment required for the extraction, and processing of the extract can be smaller size than if the vegetative mater all required immediate extraction. Similarly, a better economy is to be had when locations for surface-modification or vapor treatment are geographically separate from the extraction facility. Dried leaves are lighter and more easily transported than fresh, perishable vegetative matter.

The treated vegetative matter may be used as a sweetener. It may be added directly to a beverage or food item to impart sweetness. Or it may be further processed into other forms before use. For example, the vegetative matter may be crushed into a powder. Or the leaves may be used to make an extract, e.g., a stevia extract. Or it may be placed in a porous bag or pouch which holds the treated vegetative matter, but enables the desirable sweet components to leech out.

The modified vegetative matter may be brewed or steeped in water to release the sweetener. Or in one embodiment, the modified vegetative matter is crushed

The treated vegetative matter prepared by the process of the invention may be directly (e.g., modified leaves) used to formulate a flavored beverage or may be further processed to create a stevia extract or syrup which may then be used to formulate a flavored beverage. The formulated beverage may have a caloric content that is less than 200 kcal per serving. The beverage may be provided in a ready-to-drink format or may be in a powdered or concentrated form.

Additionally, a variety of ingredients may be included in the preparation of sweetening composition according to the present invention.

For example, a bulking agent may be included. Suitable bulking agents include, for example, inulin, fructooligosaccharide (FOS) and other fibers, maltodextrins, sugar alcohols such as erythritol, xylitol, sorbitol, lactisol, or disaccharides or oligosaccharides having a sugar alcohol at a chain terminus, a digestion resistant maltodextrin (e.g., FiberSol), a sugar polymer, such as polydextrose, and mixtures thereof. Preferably, the soluble food ingredient is a fiber. The sweetening composition may include a sugar alcohol which has a cooling effect and may further reduce the perceived bitterness of *stevia.*

Another optional ingredient is a high intensity sweetener. Suitable "heat-stable, high-intensity sweeteners" include, for example, chemical compounds or mixtures of compounds which elicit a sweet taste at least five times sweeter than sucrose, as measured in accordance with the test method described in G.B. Patent No. 1,543,167. Typically such sweeteners are substantially free from degradants after being heated for about one hour at about 40°C. Examples of such suitable sweeteners include, but are not limited to, neotame, saccharin, acesulfame-K, cyclamate, neohesperdine DC, thaumatin, brazzein, aspartame, and mixtures thereof.

High intensity sweeteners are well known alternatives to nutritive sweeteners. They provide sweetness without the calories and other metabolic impacts of the nutritive sweeteners. In many cases, high intensity sweeteners provide a sweet flavor that is preferred to nutritive sweeteners. Some high intensity sweeteners, such as, aspartame, are nutritive, but are so intense that they still provide negligible calories because very small amounts are required. Other high intensity sweeteners, such as, for example, sucralose, are not absorbed when ingested and are, therefore, non-nutritive sweeteners.

In some embodiments, it is desirable to include a second stevia extract during the process of the invention. In a preferred embodiment, the second stevia extract is enriched in one or more steviol glycosides.

Often the makers or users of these sweeteners add other components to them to overcome a less pleasant taste, e.g., a bitter taste. For example, cream of tartar may be added to offset bitterness, and 2,4-dihydroxybenzoic acid may be added to control any lingering sweetness.

In addition, vitamins and minerals may also be included.

The compositions may contain other components, including flavor, aroma, other nutritional components, binders, and mixtures thereof. Although many different flavors may be included in the inventive composition, flavors such as citrus (lemon, lime, orange, etc.), berry (raspberry, strawberry, lingonberry, assai, pomegranate, etc.), or combinations thereof are particularly preferred. In a preferred embodiment, the flavor is infused in the treated vegetative matter.

### EXAMPLES

### EXAMPLE 1

The removal or reduction of these volatile components can effect evident changes in the vegetative matter. The inventors have observed that the treated vegetative matter exhibits a change in appearance in which the color of the vegetative matter darkens after the treatment and an increased propensity of the treated vegetative matter to sink in water. In Table 1, color values obtained on samples of leaves of *stevia rebaudiana* before and after treatment are provided. The leaves were treated by steaming them for 30 minutes or 60 minutes using the following procedure:

Dried stevia leaves (about 10 g) were placed in a colander or metal mesh bowl such that the leaves were spread out rather than being clumped in the center. This allowed for better contact with the steam. The colander was placed on top of a cooking pot that was sized to allow the colander to sit on top of the pot such that the bottom of the colander was above liquid level in the pot. Water was added to the pot and brought to a boil. The stevia leaves were exposed to the steam for the requisite period of time (30 minutes and 60 minutes). After steam treatment, the leaves were air dried over night at ambient conditions.

The appearance of the leaves that have been surface or structure modified will exhibit a darker color than the untreated leaves. In reference to photographic color quantification system, untreated dried leaves will exhibit a lighter color, whereas modified leaves will exhibit a darker color.

| **Sample** | **Red** | **cvR** | **Green** | **cvG** | **Blue** | **cvB** |
|---|---|---|---|---|---|---|
| **Unsteamed leaves** | 126 | 0.5 | 114 | 0.521 | 72 | 0.6 |
| **Steamed 30 minutes** | 64 | 0.645 | 55 | 0.654 | 41 | 0.7 |
| **Steamed 60 minutes** | 48 | 0.703 | 41 | 0.705 | 32 | 0.763 |
| **Gray Card With Color** | 95 | 0.455 | 86 | 0.453 | 79 | 0.494 |
| **Checker** | | | | | | |

The numerical values shown in Table 1 were computed for the Red, Green and Blue color axis similar to the Munsell color system. The values were obtained by using a camera that is calibrated using a standard gray card and color checker (last row). A photograph is taken of a dried leaf sample. Publicly available software, such as Adobe Photoshop®, is used to calculate a color value for each hue above, with a coefficient of variation (cvR, cvG, and cvB). In Table 1, the results show a distinct progression towards smaller Red, Green and Blue values (darker colors) than the untreated leaves (unsteamed leaves). The absolute values are not as critical as the trend, but values smaller than 80 for Red and Green, and smaller than 50 for Blue are indicative of surface modification as taught herein.

### EXAMPLE 2

Samples (about 0.7 g each) of unsteamed dried stevia leaves (A) and steamed treated dried stevia leaves (B, 30 minutes steaming; C, 60 minutes steaming; following the procedure of Example 1) were dried to constant weight in a Moisture Analyzer (Denver Instruments, model IR-60; 104-106 °C, 2.5-5 minutes). The mass lost is expressed as loss on drying (LOD) and is a measure of the total volatile material in the sample, including volatile organic compounds). The LOD is summarized in the table below:

| | Sample 1 (%LOD) | Sample 2 (%LOD) | Average |
|---|---|---|---|
| Unsteamed | 9.66 | 9.59 | 9.6 |
| Steamed 30 min. | 7.99 | 7.19 | 7.6 |
| Steamed 60 min. | 8.31 | 8.01 | 8.1 |

The results are depicted in Figure 1.

### Conclusion:

Stevia leaves that have been steamed are lower in volatiles components: Both the steamed samples lost more mass than the unsteamed leaf sample. This is consistent with the expectation that steaming volatilizes certain leaf components and with the anecdotal observatoion that there are odiferous components entrained in the steam and its condensate after passing through stevia leaves. The 60-minute steamed leaves seem to have a numerically greater average LOD than the 30-minute steamed leaves. The difference may be too small to be significant, but may be indicative of a tendency of leaves that have been steamed longer to absorb slightly more moisture from the ambient air.

### EXAMPLE 3

Samples (1 g each) of unsteamed dried stevia leaves (A) and steamed treated dried stevia leaves (B, 30 minutes steaming; C, 60 minutes steaming; following the procedure of Example 1) were placed in a 500 mL beaker. Water at 80° C was added to the level mark of 150 mL and a timer started immediately. Time was measured until most of the leaf mass was suspended well below liquid level or resting at the bottom of the beaker. The beaker contents were allowed to cool throughout the timing so the final temperature of the beaker contents was also recorded. The trial was run in triplicate for each sample. The average was calculated for the time to sink. The results are summarized in the table below:

| | Sample 1 | Sample 2 | Sample 3 | Average |
|---|---|---|---|---|
| **Unsteamed** | | | | |
| Time (min.) | 9 | 9 | 10 | 9.33 |
| Comment | Mostly suspended below liquid level; very few leaves touch bottom. | | | |
| | | | | |
| **Steamed 30 min.** | | | | |
| Time (min.) | 7.25 | 7 | 8 | 7.42 |
| Comment | About half of the leaf mass resting on the bottom; remainder largely suspended; a few leaves float. | | | |
| | | | | |
| **Steamed 60 min.** | | | | |
| Time (min.) | 3.25 | 4.1 | 4.09 | 3.81 |
| Comment | All the leaves suspendedin the liquid, most resting onthe bottom. | | | |
| | | | | |

### Conclusions:

Dried stevia leaves that have been steamed sink faster than unsteamed dried stevia leaves:
The leaves that are steamed for 60 minutes sank in less than half the time of unsteamed leaves, and about twice as fast as the leaves steamed for 30 minutes. The range of time values for the three conditions tested did not overlap, so the differences are expected to be significant. The results are consistent with the hypothesis that leaves where particularly surface oils and surface structure has been disrupted by steaming will more readily absorb water and give up solutes. The extent to which the bulk of leaves in the sample are suspended within the liquid indicates both the leaves and surrounding solution have similar specific gravity and are at equilibrium in the distribution of solutes and water. That leaves float shows that these are not at equilibrium and have impeded the flow of solution into the leaf.

### EXAMPLE 4

In the process of soaking, most of the leaves reached the point of suspension or sinking. The leaves were recovered from each experiment and dried overnight at ambient conditions, then the % LOD measured for each sample. The results are in the table below:

| | Sample 1 (% LOD) | Sample 2 (% LOD) | Sample 3 (% LOD) | Average |
|---|---|---|---|---|
| Unsteamed | 11.86 | 11.31 | 11.70 | 11.62 |
| 30 minutes steamed | 11.09 | 11.47 | 11.51 | 11.36 |
| 60 minutes steamed | 11.37 | 10.67 | 11.69 | 11.24 |

### Conclusions:

There is no inherent difference between leaf samples other than the effects of steaming:
Considerable overlap is evident between the three ranges and although there is a small numerical difference trending with steaming time, it is likely an artifact and there is no true difference among the three groups. This demonstrates that there is no inherent difference between the leaf samples and that the differences observed in LOD and time-to-sink are due to the modification of leaf structure by steaming.

### EXAMPLE 5

Stevia leaves (30 g) were placed in an insulated glass cylinder fitted onto a steam-generator flask such that steam passed directly into the leaves. Overhead vapors were conveyed to a water-cooled condenser, and the condensate was collected in a flask. The boiling water temperature was slightly super-heated (103° C) by adding 70 g salt to 1.2 L of water in the steam-generator flask. A slight flow of nitrogen gas was used to increase vapor traffic and reduce condensation in the steam chamber. The stevia leaves were steamed for 45 minutes, then removed, and dried in a conventional oven at 93° C (200° F) for 1 hour and at 99° C (210° F) for 2 hours. Recovered 23 g dried leaves; part of the loss attributed to incomplete material transfers. The dried leaves were essentially odorless, whereas the condensate appeared cloudy, and had a strong characteristic "green-grassy" odor of dried Stevia leaves.

## Claims

1. A process for preparing a sweetener comprising the steps of:
(a) removing volatile components from dried stevia leaves by vapor entrainment; and
(b) extracting the treated stevia leaves from step (a) through aqueous extraction.

2. The process of claim 1, wherein step (a) is performed in an apparatus selected from the group consisting of a distillation tower, a fractionation tower counter-current tower, a damp dryer, a steamer-extractor, and combinations thereof.

3. The process of any of claims 1 or 2, wherein step (a) is a continuous process, a batch process, a semi-batch process, or any combination thereof.

4. The process of any of claims 1 to 3, wherein step (b) is performed in a single step or multiple steps.

5. The process of any of claims 1 to 4, wherein step (b) is performed with a beverage.

6. The process of any of claims 1 to 5, wherein the step (b) is performed with tea or coffee.

7. The process of any of claims 1 to 6, wherein exposing the dried leaves to vapor entrainment removes volatile components selected from the group consisting of surface oils, flavored components, waxes, or combinations thereof.

8. The process of any of claims 1 to 7, wherein the removal of volatile components results in treated stevia leaves with more open structure and increased water permeability than untreated stevia leaves.

9. The process of any of claims 1 to 8, wherein the treated stevia leaves exhibit a Red value of less than about 80, a Green value of less than about 80, and a Blue value of less than about 50 when using a color quantification system.

10. The process of any of claims 1 to 9, wherein the treated stevia leaves include low levels of volatile components.

11. The process of any of claims 1 to 10, wherein the treated stevia leaves exhibit greater affinity to sink in water upon soaking the treated leaves compared to untreated comparable stevia leaves.

12. The process of claim 1, further comprising the step of applying frictional forces to the dried stevia leaves to facilitate the removal or reduction of volatile components.

13. The process of claim 12, wherein the frictional forces include brushing and scraping the surface with a material such as fine plastic adsorbent beads or filaments, optionally wherein the brushing and scraping is performed at a temperature slightly above ambient temperature.

14. The process of claim 1, additionally comprising the step of drying the stevia leaves from step (a) prior to the aqueous extraction step of step (b).

## Patentansprüche

1. Verfahren zur Herstellung eines Süßstoffs, umfassend die Schritte:
(a) Entfernen von flüchtigen Komponenten aus getrockneten Stevia-Blättern durch Mitschleppen mit Dampf; und
(b) Extrahieren der behandelten Stevia-Blätter aus Schritt (a) durch wässrige Extraktion.

2. Verfahren nach Anspruch 1, wobei Schritt (a) in einem Apparat ausgewählt aus der Gruppe bestehend aus einem Destillationsturm, einem Fraktionierturm, einem Gegenstromturm, einem Feuchttrockner, einem Dampfbehandler-Extraktor und Kombinationen davon durchgeführt wird.

3. Verfahren nach einem der Ansprüche 1 oder 2, wobei Schritt (a) ein kontinuierliches Verfahren, ein Chargenverfahren, ein Halbchargenverfahren oder jegliche Kombination davon ist.

4. Verfahren nach einem der Ansprüche 1 bis 3, wobei Schritt (b) in einem einzelnen Schritt oder mehreren Schritten durchgeführt wird.

5. Verfahren nach einem der Ansprüche 1 bis 4, wobei Schritt (b) mit einem Getränk durchgeführt wird.

6. Verfahren nach einem der Ansprüche 1 bis 5, wobei der Schritt (b) mit Tee oder Kaffee durchgeführt wird.

7. Verfahren nach einem der Ansprüche 1 bis 6, wobei Exponieren der getrockneten Blätter gegenüber Mitschleppen mit Dampf flüchtige Komponenten ausgewählt aus der Gruppe bestehend aus Oberflächenölen, aromatisierten Komponenten, Wachsen oder Kombinationen davon entfernt.

8. Verfahren nach einem der Ansprüche 1 bis 7, wobei die Entfernung flüchtiger Komponenten zu behandelten Stevia-Blättern mit offenerer Struktur und erhöhter Wasserdurchlässigkeit als unbehandelte Stevia-Blätter führt.

9. Verfahren nach einem der Ansprüche 1 bis 8, wobei die behandelten Stevia-Blätter einen Rotwert von weniger als etwa 80, einen Grünwert von weniger als etwa 80 und einen Blauwert von weniger als etwa 50 zeigen, wenn ein Farbquantifizierungssystem verwendet wird.

10. Verfahren nach einem der Ansprüche 1 bis 9, wobei die behandelten Stevia-Blätter geringe Gehalte an flüchtigen Komponenten einschließen.

11. Verfahren nach einem der Ansprüche 1 bis 10, wobei die behandelten Stevia-Blätter eine größere Affinität zum Absinken in Wasser zeigen, wenn die behandelten Blätter sich vollsaugen, verglichen mit unbehandelten vergleichbaren Stevia-Blättern.

12. Verfahren nach Anspruch 1, des Weiteren umfassend den Schritt des Anwendens von Reibungskräften auf die getrockneten Stevia-Blätter, um die Entfernung oder Reduktion der flüchtigen Komponenten zu erleichtern.

13. Verfahren nach Anspruch 12, wobei die Reibungskräfte Bürsten und Schaben der Oberfläche mit einem Material wie feinen Kunststoffadsorbenskugeln oder Filamenten einschließen, wobei das Bürsten und Schaben gegebenenfalls bei einer Temperatur etwas oberhalb von Umgebungstemperatur durchgeführt wird.

14. Verfahren nach Anspruch 1, das zudem den Schritt des Trocknens der Stevia-Blätter aus Schritt (a) vor dem wässrigen Extraktionsschritt von Schritt (b) umfasst.

## Revendications

1. Procédé pour la préparation d'un édulcorant comprenant les étapes de :
(a) élimination de composants volatils de feuilles de stevia séchées par entraînement de vapeur ; et
(b) extraction des feuilles de stevia traitées provenant de l'étape (a) par une extraction aqueuse.

2. Procédé selon la revendication 1, l'étape (a) étant réalisée dans un appareil choisi dans le groupe constitué par une tour de distillation, une tour de fractionnement, une tour à contre-courant, un séchoir humide, un vaporisateur-extracteur et des combinaisons correspondantes.

3. Procédé selon l'une quelconque des revendications 1 et 2, l'étape (a) étant un procédé en continu, un procédé en lot, un procédé en semi-lot ou une quelconque combinaison correspondante.

4. Procédé selon l'une quelconque des revendications 1 à 3, l'étape (b) étant réalisée en une seule étape ou en plusieurs étapes.

5. Procédé selon l'une quelconque des revendications 1 à 4, l'étape (b) étant réalisée avec une boisson.

6. Procédé selon l'une quelconque des revendications 1 à 5, l'étape (b) étant réalisée avec du thé ou du café.

7. Procédé selon l'une quelconque des revendications 1 à 6, l'exposition des feuilles séchées à l'entraînement de vapeur éliminant des composants volatils choisis dans le groupe constitué par des huiles de surface, des composants aromatisés, des cires et des combinaisons correspondantes.

8. Procédé selon l'une quelconque des revendications 1 à 7, l'élimination de composants volatils ayant pour résultat des feuilles de stevia traitées dotées d'une structure plus ouverte et d'une perméabilité à l'eau augmentée par rapport à des feuilles de stevia non traitées.

9. Procédé selon l'une quelconque des revendications 1 à 8, les feuilles de stevia traitées présentant une valeur de Rouge inférieure à environ 80, une valeur de Vert inférieure à environ 80, et une valeur de Bleu inférieure à environ 50 lorsqu'on utilise un système de quantification de couleur.

10. Procédé selon l'une quelconque des revendications 1 à 9, les feuilles de stevia traitées comportant de faibles taux de composants volatils.

11. Procédé selon l'une quelconque des revendications 1 à 10, les feuilles de stevia traitées présentant une plus grande affinité à couler dans l'eau lors d'un trempage des feuilles traitées par rapport à des feuilles de stevia comparables non traitées.

12. Procédé selon la revendication 1, comprenant en outre l'étape d'application de forces de friction aux feuilles de stevia séchées pour faciliter l'élimination ou la réduction de composants volatils.

13. Procédé selon la revendication 12, les forces de friction comprenant le brossage et le raclage de la surface avec un matériau tel que des perles ou des filaments absorbant(e)s en plastique fin, éventuellement le brossage et le raclage étant réalisés à une température légèrement supérieure à la température ambiante.

14. Procédé selon la revendication 1, comprenant de plus l'étape de séchage des feuilles de stevia provenant de l'étape (a) avant l'étape d'extraction aqueuse de l'étape (b).
